# EUROPEAN PATENT SPECIFICATION

(11) **EP 0 608 941 B1**
(45) Date of publication and mention of the grant of the patent: **08.12.1999**
(21) Application number: 94200145.4
(22) Date of filing: 21.01.1994
(51) Int. Cl.: A01K 1/12, A01K 1/00

(54) **A construction for automatically milking animals**
Vorrichtung zum automatischen Melken von Tieren
Dispositif de traite automatique d'animaux

(30) Priority: 27.01.1993 NL 9300154
(43) Date of publication of application: 03.08.1994
(73) Proprietor: MAASLAND N.V., 3155 PD Maasland (NL)
(72) Inventor: van der Lely, Cornelis, CH-6300 Zug (CH)
(74) Representative: Corten, Maurice Jean F.M.

(56) References cited:
- EP-A- 0 091 892
- DE-A- 2 232 480
- DE-A- 3 702 465
- DE-A- 3 704 495
- LANDBOUWMECANISATIE vol. 33, no. 12 , December 1982 , DEVENTER NL pages 1123 - 1126 IR.H.FOLKERTS 'LAGERE BOUWKOSTEN IN DE MELKVEEHOUDERIJ'

## Description

The present invention relates to a construction according to the preamble of claim 1. Such a construction is known from DE-A-37 04 495, where a construction for automatically milking animals is described which comprises several milking boxes into which the animals are led. This construction has the disadvantage that the lay-out of the stable is fixed and that it is not adaptable to different circumstances.

From EP-A-0 389 013 there is known a stable which is divided in two areas by means of a feeding path and a milking box. Via the milking box the animals can walk from one area to the other area. This construction has the disadvantage that the groups of animals are mixed with each other.

From document DE-A-22 32 480 there is known a stable which is provided with a pre-arranged transport path for the animals which lead the animals along various service stations. The animals are lead to these service stations by means of a box which is drawn along this transport path by a movable chain. This construction has the disadvantage that it is a relative expensive construction and the animals are limited to move freely about the areas.

The invention has for its object to provide a construction, in which an advantageous use can be made of the milking robot.

According to the invention, the construction is characterized in that the construction comprises driving means, which are present in a passage, by means of which the animals are driven from the individual areas to the meeting point. In this way it is achieved that at least one group of animals can pass from a respective area for said group of animals to the milking robot area before a former group of animals can pass from the feeding area to a respective area for said former group of animals and the groups of animals remain separated from each other. In the following the areas for the groups of animals are also indicated as resting areas.

It is advantageous when, seen in the pass-through direction of the animals in the space, a buffer area is provided behind the feeding area, as well as a buffer area preceding the feeding area after the milking robot area. These areas serve as a kind of buffer to have the circulation through the construction from a resting area via the milking area and the feeding area, back to the resting area progressing in a more efficient manner, whilst the groups of animals are constantly kept separate from each other.

The invention is also based on the recognition that, when the animals pass in separate groups through the construction a number of times, for example three times per 24 hours, an adequate period of time will always pass before a milked animal is milked again. It is basically a disadvantage if an animal would be milked again at too short an interval.

For a better understanding of the invention and to show how the same may be carried into effect, reference will now be made, by way of example, to the accompanying drawings, wherein:
Figures 1 to 8 inclusive show the lay-out of a shed, in which the individual Figures show how the animals staying in this shed pass in consecutive time intervals through the shed with incorporated milking robot; and
Figure 9 shows the division of a pasture into pasture sections, wherein furthermore the shed area intended for the animals is shown and the path surrounding the pasture sections for proceeding from the relevant pasture sections to the shed.

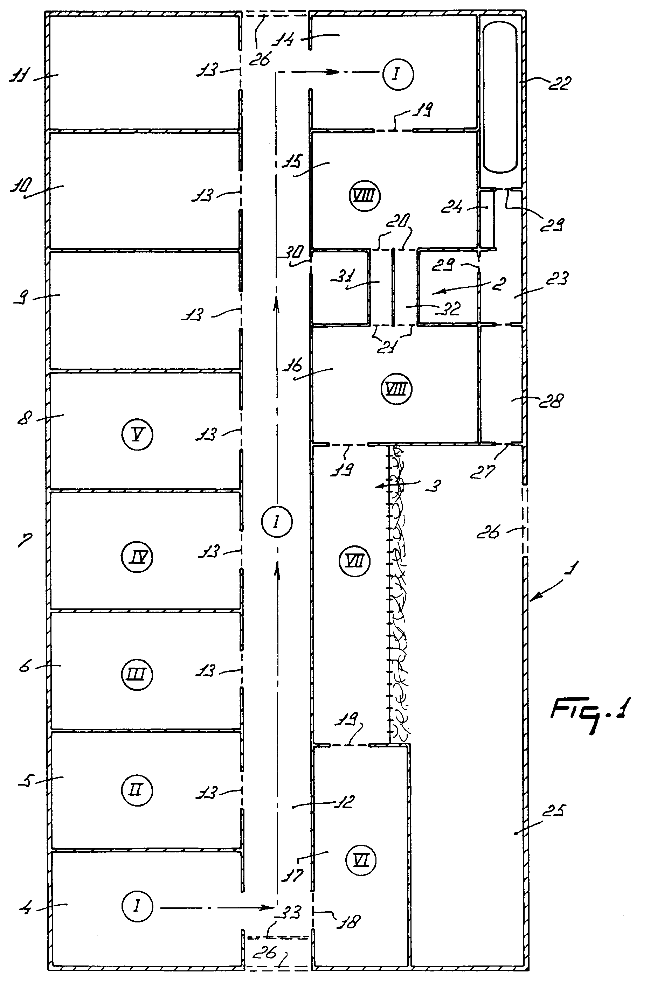

The construction for automatically milking animals, such as cows, is constituted in the Figures 1 to 8 inclusive by a shed 1 incorporating a robot area 2, a feed station 3 as well as a plurality of areas for groups of animals with a plurality of meeting points. The embodiment shown is based on the assumption that there are eight groups of animals, for which the areas 4 to 11 inclusive are intended. In this embodiment these areas 4 to 11 inclusive are arranged in a side-by-side relationship in the longitudinal direction of the shed. A path or passage 12 passes along the area 4 to 11 inclusive approximately in the centre of the shed. Access to the areas 4 to 11 inclusive from this passage 12 and vice versa is provided by doors, more specifically computer-controlled doors 13. At the other side of the passage 12, in the Figure from right to left, a meeting point 14, a meeting point 15, the robot area 2, a meeting point 16, the feed station 3 and a meeting point 17 are located. By positioning the feed station in the direction of walk relatively close behind the robot area, the animals will be stimulated by their appetite, particularly in winter, to go to the robot area to be milked there. Doors, more specifically computer-controlled doors 18 are located between the passage 12 and the meeting points 14 and 17, whereas doors, more specifically computer-controlled doors 19, are located between the meeting points 14 and 15 and between the meeting point 16 and the feed station 3 and between the feed station 3 and the meeting point 17. Located between the meeting point 15 and the robot area 2, and between the robot area 2 and the meeting point 16 there are doors, more specifically computer-controlled doors 20 and 21. In the space between the meeting point 14 and a portion of the meeting point 15 on the one hand, and the outer wall of the shed 1 on the other hand there is an area 22 for the milk tank and for a portion of the associated milking aquipment, whereas in addition a computer area 23 is located between the robot area 2 and a portion of the meeting point 15 on the one hand, and the outer wall of the shed 1 on the other hand. Besides the milking robot, a portion of the milking equipment is also housed in the robot area 2. The milking process computer 24 is located in the area 23. Between the feed station 3 and the meeting point 17 on the one hand and the outer wall of the shed 1 on the other hand there is an area 25 for the storage of roughage and concentrates. Arranged along the feed station 3, this area 25 accommodates a gutter and/or feed troughs for supplying roughage and/or concentrates to the animals present in the feed station 3. Access to the passage 12 and the area 25 is obtained via doors 26. The computer area 23 is accessible from the area 25 via doors 27 and the passage 28. The robot area 2 and the area 22 for the milk tank and a portion of the associated milking equipment can be reached from the computer area 23, via doors 29. The robot area 2 can also be reached from the passage 12, more in particular via the door 30. The robot area 2 is only provided with two compartments 31 and 32, whilst only one milking robot is present, which is alternately pivatable from one to the other compartment, so that animals present in both compartments can alternately be milked therein. These compartments further contain all the equipment required therein for automatically and efficiently milking the animals. In addition to a milking robot, these compartments will also accommodate the means required for cleaning the teats of the animals to be milked as well an automatic feeding system; the feed troughs forming part thereof are attached to the doors 21 and are only shown very schematically. In order to drive the animals from the individual areas to the meeting point 14, driving means 33 are present in the passage 12. All possible known driving means may be used for these driving means, such as movable fences, partitions, wires or live wires, etc. The shed organization described in the foregoing is based on a distribution of the animals to be milked over eight groups of animals, each group consisting of ten animals. It is assumed for these animals that they are to be milked three times every 24 hours. The groups of animals which have their resting area in the areas 4 to 11 inclusive, will be denoted hereinafter as group I, group II and group III, respectively, etc. up to and inclusive of group VIII. In the drawings the group numbers are shown within a circle.

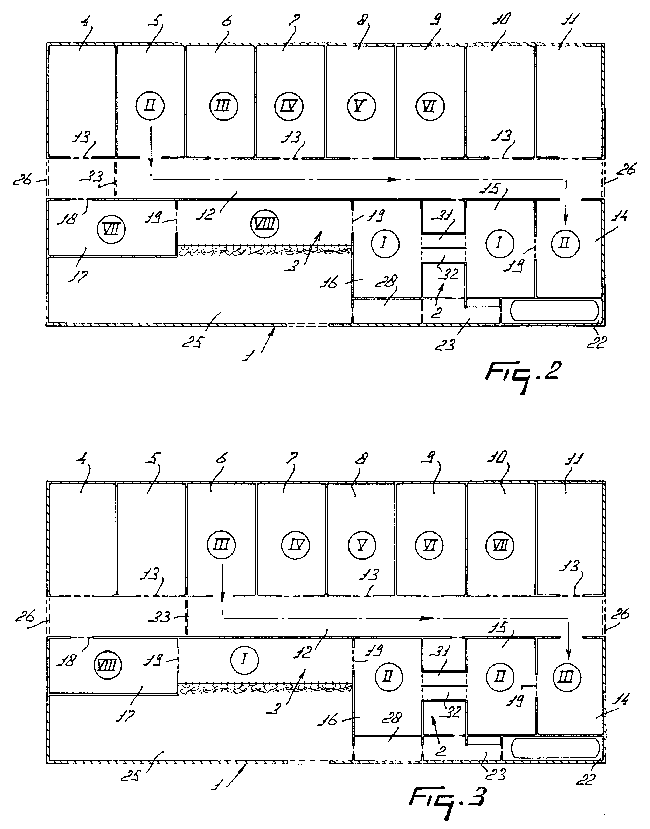

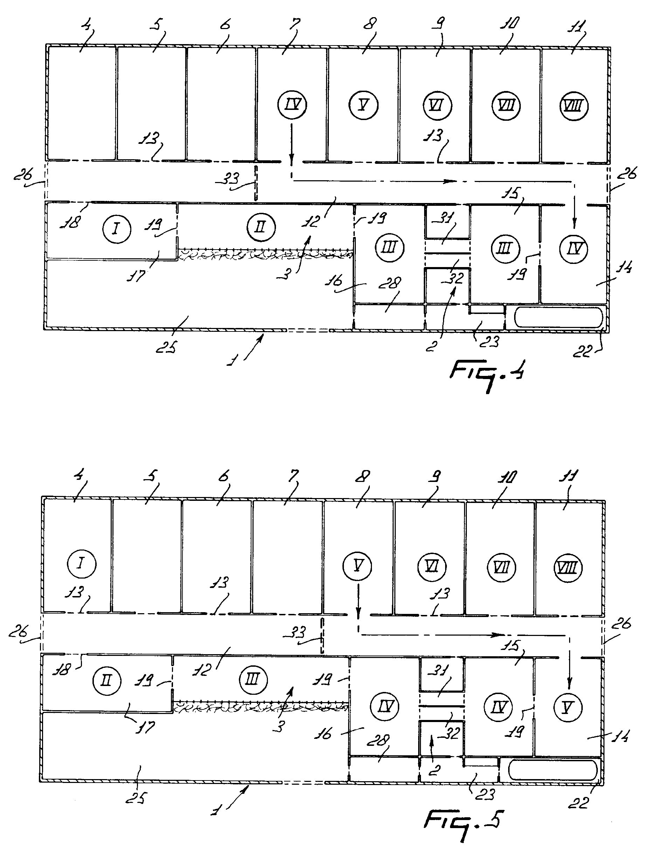

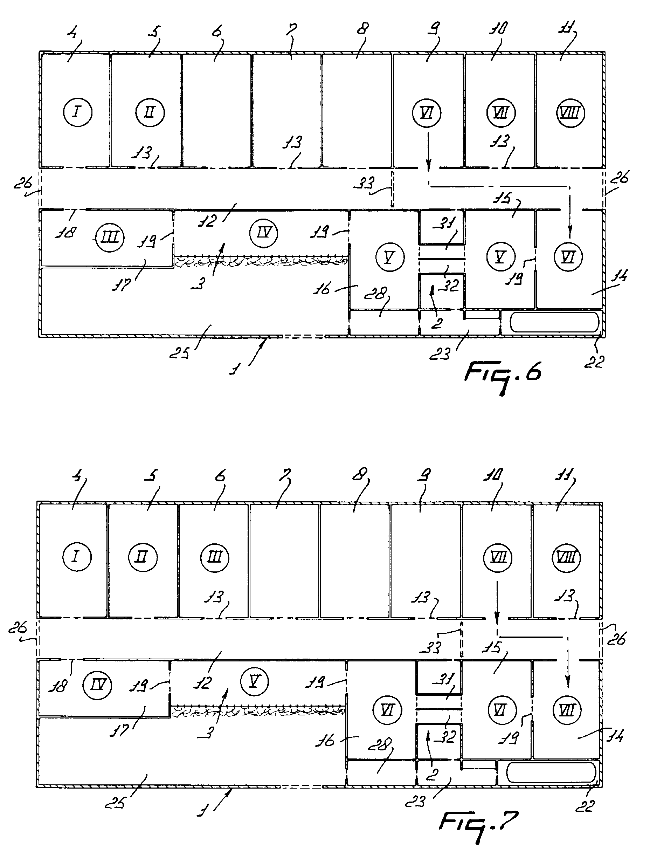

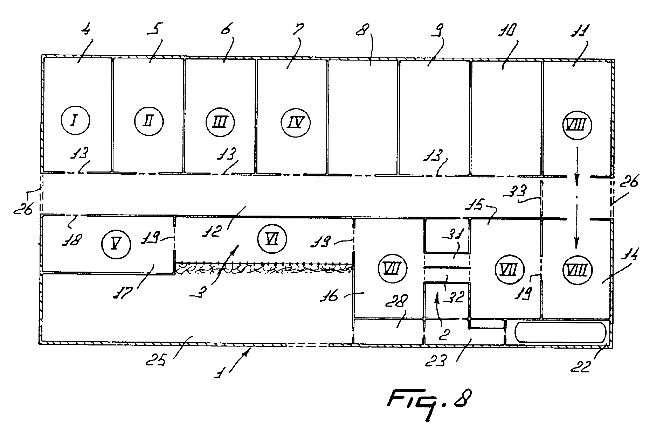

For all the animals together eight hours are available for each milking cycle. By distributing the animals over eight groups, it holds that each group of animals must be milked in one hour. Since there are ten animals in each group, this means that milking an individual animal may occupy six minutes. The time schedule for the passage of the groups of animals through the shed is such that always one hour is allotted for milking each group of animals, one hour for feeding each group of animals, whilst six hours are allotted to each group of animals per eight-hours' cycle for resting and for passing from the relevant resting area to the robot area and from the feed station back to the relevant resting area. To realize such a shed organization, a tight time schedule must also be maintained within the one-hour-cycle. In Figure 1 the initial situation of such a one-hour-cycle is shown. This cycle starts, for example, at 6 o'clock in the morning. From 6 to 6.10 a.m. the animals of group I present in area 4 are herded to the meeting point 14. At 6.10 a.m. all the animals of this group can be present at the meeting point 14 and the door 18 of this meeting point is closed. At the same time the door 13 of the area 4 is closed. At 6.11 a.m. the door 18 of the meeting point 17 and the door 13 of the area 9 are opened and the animals of group VI can go from the meeting point 17 to the area 9. At 6.21 a.m. the doors of the meeting point 17 and of the area 9 are closed. At that moment the last animals of group VIII which previous thereto were still present in the meeting point 15, should be in the robot area 2. In the period from 6.22 a.m. to 6.27 a.m. the one but last animal of group VIII must be milked and the animals of group I can go from the meeting point 14 to the meeting point 15. At 6.27 a.m. all the animals of group I must be present in the meeting point 15 and the doors 19 between the meeting points 14 and 15 are closed, whilst at that moment also the last but one animal of group VIII has been milked and must subsequently leave the robot area 2 and go to the meeting point 16. In the period from 6.28 a.m. to 6.33 a.m. the animals of group VII present in the feed station 3 must go to the meeting point 17, the last animal of group VIII is milked and the first animal of group I can enter the robot area to be milked there. At 6.33 a.m. all the animals of group VII will be present in the meeting point 17 and all the animals of group VIII are present in the meeting point 16. In the period from 6.34 a.m. to 6.39 a.m. the animals of group VIII can go from the meeting point 16 to the feed station 3, whilst a second animal of group I can enter the robot area 2. At 6.39 a.m. all the animals of group VIII have arrived in the feed station 3 and two animals of group I are present in the robot area 2, whilst the remaining animals of group I are still present in the meeting point 15. After the period from 6.40 a.m. to 7.00 a.m., i.e. at the end of the one-hour-cycle, the situation is again as it was at the beginning of the one-hour-cycle, the difference being that now group VII is present in the meeting point 17, group VIII in the feed station 3, whilst a portion of the animals of group I is present in the meeting point 15, a portion in the meeting point 16 and two animals of this group in the robot area 2. This situation is illustrated in Figure 2. At 7.00 a.m. the driving means 33 are now moved to the position shown in Figure 2, and the animals of group II are herded from the area 5 to the meeting point 14. As soon as the animals of group II have arrived in the meeting point 14, the driving means are made inoperative, they are, for example, hinged upwardly. The second one-hour-cycle which started at 7.00 a.m. now proceeds in the same manner as the first one-hour-cycle and ends as soon as all the animals of group VIII are present in the meeting point 17, all the animals of group I are present in the feed station 3, whilst the animals of group II are still partly collected in the meeting point 15, partly in the meeting point 16 and two of these animals are in the robot area 2. This situation is shown in Figure 3. At the end of this second one-hour-cycle, that is to say at 8.00 a.m., the drive means 33 are adjusted to the position shown in Figure 3 and group III can go from the section 6 to the meeting point 14. At the end of this third one-hour-cycle, that is to say at 9.00 a.m., all the animals of group I are present in the meeting point 17, all the animals of group II in the feed station 3 and the animals of group III are partly present in the meeting point 15, partly in the meeting point 16 and again two animals of this group are in the robot area 2. This situation is shown in Figure 4. The drive means 33 are moved further, so that the animals of group IV can go from the area 7 to the meeting point 14. The consecutive cycles are repeated, so that at 10.00 a.m. the animals of group V can proceed from the area 8 to the meeting point 14 (see Figure 5), at 11.00 a.m. the animals of group VI from the area 9 to the meeting point 14 (see Figure 6), at 12.00 a.m. the animals of group VII from the section 10 to the meeting point 14 (see Figure 7) and at 13.00 p.m. the animals of group VIII can proceed from the area 11 to the meeting point 14 (see Figure 8). At 14.00 p.m. an eight-hours-cycle has ended and all the animals have been milked once and a next eight-hours-cycle can start and that more particularly in the situation as shown in Figure 1. For each cycle of eight hours each group of animals has consequently one hour available for going from one of the areas 4 to 11 inclusive to the meeting point 14, one hour for being milked, thereafter one hour for feeding, one hour for returning from the meeting point 17 to the relevant areas and four hours for staying there.

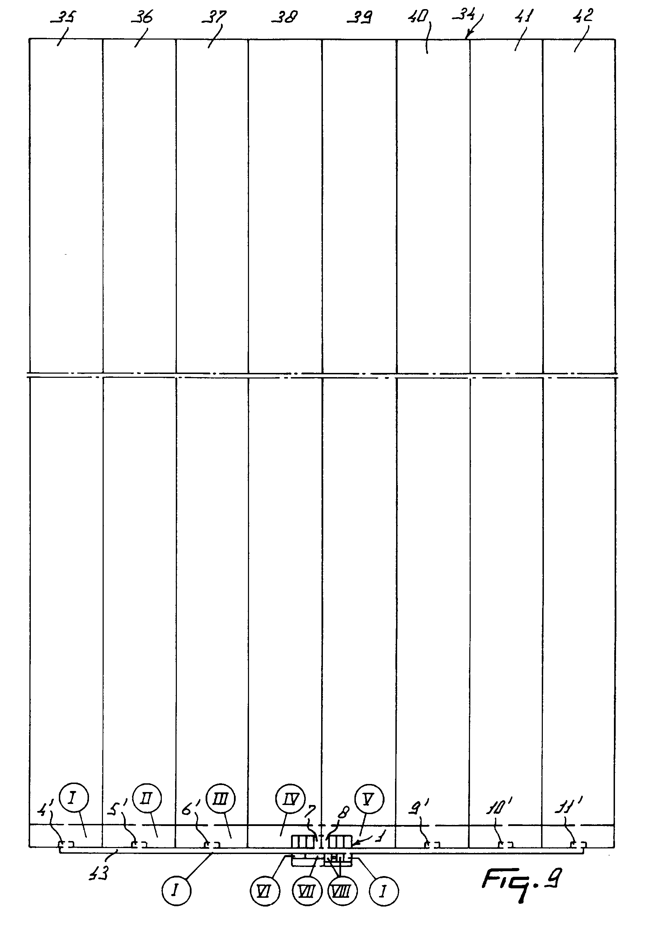

Figure 9 shows a pasture 34, which is divided into eight pasture sections 35 to 42 inclusive. Each of these pasture sections has a size of approximately five hectares. A path 43 extends along the short side of the pasture sections. The shed shown in Figures 1 to 8 inclusive is positioned such in Figure 9 that the path 43 is in the extension of the passage 12 of the shed. In this situation, which occurs in summer, the areas 4, 5 and 6 and the areas 9, 10 and 11 in the shed are closed and as a substitution thereof areas 4', 5', 6' and 9', 10' and 11' are created, which last-mentioned areas are located at the end of the short side of the pasture sections, whereas the doors of these last-mentioned areas again give access to the path 43. At the rear side the areas 4', 5', 6' and 9', 10' and 11' have free access to a seperate and, if necessary, closable portion of the relevant pasture sections. The areas 7 and 8 of the shed 1 remain in normal use, on the understanding that these sections then also give free access at the rear side to a portion of the relevant pasture sections 38 and 39. In this summer period the doors 26, which give access to the passage 12 of the shed 1, will be open, so that in the consecutive one-hour-cycles and always in the same manner and in accordance with the same time schedule as described hereinbefore, groups of animals can pass from a relevant pasture section over the path 43 to in the first instance the meeting point 14 of the shed. The animals can always return from the milking robot area to the pasture section intended for them.

The invention is not limited to the embodiment, the associated distribution over groups and the associated time schedule in accordance with which the groups pass through the shed, described here: the invention also relates to all kinds of variants which are within the wording of the accompanying claims.

## Claims

1. A construction for automatically milking animals, such as cows, comprising a space (1) with a plurality of areas (4 - 11) in which the animals can freely move about, said areas (4 - 11) being arranged to accommodate separate groups of animals, the construction further comprising a milking robot area (2) with a milking robot, an area (3) for feeding grass or hay or such mown crop and areas (4 - 11) for the groups of animals, the milking robot area (2) and the feeding area (3) connected in such a way, that via computer-controlled doors (13; 18; 19; 20; 21; 26; 27) the animals can pass from a respective area for a group of animals to the milking robot area (2) and from the milking robot area (2) via the feeding area (3) to the respective area for said group of animals, characterized in that the construction comprises driving means (33), which are present in a passage (12) by means of which the animals are driven from the individual areas to a meeting point (14).

2. A construction as claimed in claim 1, characterized in that the space (1) comprises a plurality of areas (4 - 11) for groups of animals, which areas are arranged side-by-side in the space (1).

3. A construction as claimed in claim 1 or 2, characterized in that, seen in the pass-through direction of the animals in the space (1), a buffer area (17) for the animals is provided behind the feeding area (3).

4. A construction as claimed in any one of the preceding claims, characterized in that, seen in the pass-through direction of the animals in the space (1), a buffer area (16) for the animals is provided preceding the feeding area (3) after the milking robot area (2).

5. A construction as claimed in any one of the preceding claims, characterized in that a path (43) to the milking robot area (2) extends along the end of a number of pasture sections (35 - 42).

6. A construction as claimed in claim 5, characterized in that the path (43) extends transversely to the pasture sections (35 - 42).

7. A construction as claimed in claim 5 or 6, characterized in that a space (1) is located approximately halfway the path.

8. A construction as claimed in any one of claims 5 to 7, characterized in that the path (12) in the space (1) is located in the extension of the path (43) to the pasture sections (35 - 42).

9. A construction as claimed in any one of claims 5 to 8, characterized in that eight pasture sections (35 - 42) are present, each pasture section being intended for a group of ten animals.

10. A construction as claimed in any one of claims 5 to 9, characterized in that a pasture section (35 - 42) has a size of approximately five hectares.

11. A construction as claimed in any one of the preceding claims, characterized in that the space (1) is a loose housing, in which the animals can freely move about.

12. A construction as claimed in any one of the preceding claims, characterized in that, each time after they have passed through the milking robot area (2) and the feeding area (3), the animals have a period of rest of approximately six hours.

13. A construction as claimed in any one of the preceding claims, characterized in that the animals have a feeding time of approximately one hour.

14. A construction as claimed in any one of the preceding claims, characterized in that the milking time of an animal is approximately six minutes.

15. A construction as claimed in any one of the preceding claims, characterized in that the space (1) provides room for approximately eighty animals.

16. A construction as claimed in any one of the preceding claims, characterized in that the animals are milked three times a day.

17. A construction as claimed in any one of the preceding claims, characterized in that two meeting points (14, 15) are located before the milking robot.

18. A construction as claimed in any one of the preceding claims, characterized in that the milking robot area (2) comprises two compartments (31, 32) with one milking robot, an animal always being present in one of the compartments (31, 32).

19. A construction as claimed in claim 18, characterized in that the milking robot intended for both compartments (31, 32) is equipped with teat cups which can be automatically connected to the teats of an animal present at one side of the milking robot and, after this animal has been milked, to the teats of an animal present at the other side thereof.

20. A construction as claimed in any one of the preceding claims, characterized in that a meeting point (116) is located between the feeding area (3) and the milking robot area (2).

21. A construction as claimed in any one of the preceding claims, characterized in that, after having been milked and provided with fodder, a group of animals proceeds to the resting area (4 - 11) intended for them.

22. A construction as claimed in any one of the preceding claims, characterized in that the space (1) is in connection with a pasture (35 - 42), and that the animals can reach the pasture (35 - 42) via the path (12, 43) along or through the resting areas (4 - 11, 4' - 11').

23. A construction as claimed in claim 22, characterized in that the pasture is subdivided into sections (35 - 42), the number of which approximately corresponds to the number of groups of animals.

24. A construction as claimed in any one of the preceding claims, characterized in that the computer-controlled doors (13, 18, 19, 20, 21, 26, 27) are arranged in the path, the meeting points (14 - 17) and the resting areas (4 - 11).

## Patentansprüche

1. Vorrichtung zum automatischen Melken von Tieren, wie z. B. Kühen, mit einem Raum (1), der mehrere Bereiche (4 bis 11) aufweist, in denen sich die Tiere frei bewegen können, wobei von den Bereichen (4 bis 11) getrennte Gruppen von Tieren aufzunehmen sind und die Vorrichtung ferner einen Melkroboterbereich (2) mit einem Melkroboter, einen Bereich (3) zur Fütterung mit Gras oder Heu oder sonstigem Mähgut sowie Bereiche (4 bis 11) für die Gruppen von Tieren aufweist, wobei der Melkroboterbereich (2) und der Fütterungsbereich (3) derart miteinander verbunden sind, daß die Tiere durch rechnergesteuerte Türen (13; 18; 19; 20; 21; 26; 27) von einem jeweiligen Bereich für eine Gruppe von Tieren zu dem Melkroboterbereich (2) und von dem Melkroboterbereich (2) über den Fütterungsbereich (3) zu dem jeweiligen Bereich für die Gruppe von Tieren gehen können,
dadurch gekennzeichnet, daß die Vorrichtung eine Antriebsvorrichtung (33) aufweist, die in einem Durchgang (12) angeordnet ist, und mittels der die Tiere aus den einzelnen Bereichen in einen Begegnungsbereich (14) getrieben werden.

2. Vorrichtung nach Anspruch 1,
dadurch gekennzeichnet, daß der Raum (1) mehrere Bereiche (4 bis 11) für Gruppen von Tieren aufweist, die nebeneinander in dem Raum (1) angeordnet sind.

3. Vorrichtung nach Anspruch 1 oder 2,
dadurch gekennzeichnet, daß in Durchgangsrichtung der Tiere in dem Raum (1) hinter dem Fütterungsbereich (3) ein Pufferbereich (17) für die Tiere vorgesehen ist.

4. Vorrichtung nach einem der vorhergehenden Ansprüche,
dadurch gekennzeichnet, daß in Durchgangsrichtung der Tiere in dem Raum (1) vor dem Fütterungsbereich (3) nach dem Melkroboterbereich (2) ein Pufferbereich (16) für die Tiere vorgesehen ist.

5. Vorrichtung nach einem der vorhergehenden Ansprüche,
dadurch gekennzeichnet, daß sich ein Gang (43) zu dem Melkroboterbereich (2) entlang dem Ende einer Anzahl von Weideabschnitten (35 bis 42) erstreckt.

6. Vorrichtung nach Anspruch 5,
dadurch gekennzeichnet, daß sich der Gang (43) quer zu den Weideabschnitten (35 bis 42) erstreckt.

7. Vorrichtung nach Anspruch 5 oder 6,
dadurch gekennzeichnet, daß ein Raum (1) etwa in der Hälfte der Länge des Ganges angeordnet ist.

8. Vorrichtung nach einem der Ansprüche 5 bis 7,
dadurch gekennzeichnet, daß der Gang (12) in dem Raum (1) die Verlängerung des Ganges (43) zu den Weideabschnitten (35 bis 42) ist.

9. Vorrichtung nach einem der Ansprüche 5 bis 8,
dadurch gekennzeichnet, daß acht Weideabschnitte (35 bis 42) vorhanden sind, wobei jeder Weideabschnitt für eine Gruppe von zehn Tieren bestimmt ist.

10. Vorrichtung nach einem der Ansprüche 5 bis 9,
dadurch gekennzeichnet, daß ein Weideabschnitt (35 bis 42) eine Größe von etwa fünf Hektar hat.

11. Vorrichtung nach einem der vorhergehenden Ansprüche,
dadurch gekennzeichnet, daß der Raum (1) ein Laufstall ist, in dem sich die Tiere frei bewegen können.

12. Vorrichtung nach einem der vorhergehenden Ansprüche,
dadurch gekennzeichnet, daß den Tieren nach jedem Durchlaufen des Melkroboterbereiches (2) und des Fütterungsbereiches (3) eine Ruhezeit von etwa sechs Stunden zur Verfügung steht.

13. Vorrichtung nach einem der vorhergehenden Ansprüche,
dadurch gekennzeichnet, daß eine Fütterungszeit von etwa einer Stunde für die Tiere vorgesehen ist.

14. Vorrichtung nach einem der vorhergehenden Ansprüche,
dadurch gekennzeichnet, daß die Melkzeit eines Tieres etwa sechs Minuten beträgt.

15. Vorrichtung nach einem der vorhergehenden Ansprüche,
dadurch gekennzeichnet, daß der Raum (1) Platz für etwa achtzig Tiere bietet.

16. Vorrichtung nach einem der vorhergehenden Ansprüche,
dadurch gekennzeichnet, daß die Tiere dreimal pro Tag gemolken werden.

17. Vorrichtung nach einem der vorhergehenden Ansprüche,
dadurch gekennzeichnet, daß zwei Begegnungsbereiche (14, 15) vor dem Melkroboter angeordnet sind.

18. Vorrichtung nach einem der vorhergehenden Ansprüche,
dadurch gekennzeichnet, daß der Melkroboterbereich (2) zwei Abteile (31, 32) mit einem Melkroboter aufweist, wobei sich stets ein Tier in einem der Abteile (31, 32) aufhält.

19. Vorrichtung nach Anspruch 18,
dadurch gekennzeichnet, daß der für beide Abteile (31, 32) vorgesehene Melkroboter mit Zitzenbechern versehen ist, die automatisch an die Zitzen eines auf der einen Seite des Melkroboters stehenden Tieres und nach dem Melken dieses Tieres an die Zitzen eines auf der anderen Seite stehenden Tieres anschließar sind.

20. Vorrichtung nach einem der vorhergehenden Ansprüche,
dadurch gekennzeichnet, daß zwischen dem Pütterungsbereich (3) und dem Melkroboterbereich (2) ein Begegnungsbereich (16) vorgesehen ist.

21. Vorrichtung nach einem der vorhergehenden Ansprüche,
dadurch gekennzeichnet, daß eine Gruppe von Tieren nach dem Melken und der Versorgung mit Futter zu dem für sie vorgesehenen Ruhebereich (4 bis 11) geht.

22. Vorrichtung nach einem der vorhergehenden Ansprüche,
dadurch gekennzeichnet, daß der Raum (1) mit einer Weide (35 bis 42) verbunden ist, und daß die Weide (35 bis 42) von den Tieren über den Gang (12, 43) zu erreichen ist, der längs der Ruhebereiche (4 bis 11, 4' bis 11') oder durch diese hindurch verläuft.

23. Vorrichtung nach Anspruch 22,
dadurch gekennzeichnet, daß die Weide in Abschnitte (35 bis 42) unterteilt ist, deren Anzahl etwa der Anzahl der Gruppen von Tieren entspricht.

24. Vorrichtung nach einem der vorhergehenden Ansprüche,
dadurch gekennzeichnet, daß die rechnergesteuerten Türen (13, 18, 19, 20, 21, 26, 27) in dem Gang, den Begegnungsbereichen (14 bis 17) und den Ruhebereichen (4 bis 11) angeordnet sind.

## Revendications

1. Construction pour traite automatique d'animaux, tels que des vaches, comportant un espace (1) muni d'une pluralité de zones (4 à 11) dans lesquelles les animaux peuvent se déplacer librement, lesdites zones (4 à 11) étant agencées pour recevoir des groupes d'animaux séparés, la construction comportant de plus une zone de robot de traite (2) munie d'un robot de traite, une zone (3) pour alimenter de l'herbe ou du foin ou une telle récolte fauchée, et des zones (4 à 11) pour les groupes d'animaux, la zone de robot de traite (2) et la zone d'alimentation (3) étant reliées, via des portes commandées par ordinateur (13; 18; 19; 20; 21; 26; 27), de manière telle que les animaux peuvent passer d'une zone respective destinée à un groupe d'animaux vers la zone de robot de traite (2) et depuis la zone de robot de traite (2) via la zone d'alimentation (3) vers la zone respective destinée audit groupe d'animaux, caractérisée en ce que la construction comporte des moyens d'entraînement (33) qui sont situés dans un passage (12), par l'intermédiaire desquels les animaux sont entraînés depuis les zones individuelles vers un point de rencontre (14).

2. Construction selon la revendication 1, caractérisée en ce que l'espace (1) comporte une pluralité de zones (4 à 11) pour des groupes d'animaux, lesquelles zones sont agencées côte à côte dans l'espace (1).

3. Construction selon la revendication 1 ou 2, caractérisée en ce que, vue dans la direction de transit des animaux dans l'espace (1), une zone tampon (17) pour les animaux est prévue derrière la zone d'alimentation (3).

4. Construction selon l'une quelconque des revendications précédentes, caractérisée en ce que, vue dans la direction de transit des animaux dans l'espace (1), une zone tampon (16) pour les animaux est agencée avant la zone d'alimentation (3) après la zone de robot de traite (2).

5. Construction selon l'une quelconque des revendications précédentes, caractérisée en ce qu'un trajet (43) vers la zone de robot de traite (2) s'étend le long de l'extrémité de plusieurs tronçons de pré (35 à 42).

6. Construction selon la revendication 5, caractérisée en ce que le trajet (43) s'étend transversalement aux tronçons de pré (35 à 42).

7. Construction selon la revendication 5 ou 6, caractérisée en ce qu'un espace (1) est situé approximativement au milieu du trajet.

8. Construction selon l'une quelconque des revendications 5 à 7, caractérisée en ce que le trajet (12) situé dans l'espace (1) est positionné dans le prolongement du trajet (43) des tronçons de pré (35 à 42).

9. Construction selon l'une quelconque des revendications 5 à 8, caractérisée en ce que huit tronçons de pré (35 à 42) sont présents, chaque tronçon de pré étant prévu pour un groupe de dix animaux.

10. Construction selon l'une quelconque des revendications 5 à 9, caractérisée en ce qu'un tronçon de pré (35 à 42) a une dimension d'approximativement cinq hectares.

11. Construction selon l'une quelconque des revendications précédentes, caractérisée en ce que l'espace (1) est une étable dégagée, dans laquelle les animaux peuvent se déplacer librement.

12. Construction selon l'une quelconque des revendications précédentes, caractérisée en ce que, à chaque fois après avoir passé par la zone de robot de traite (2) et la zone d'alimentation (3), les animaux ont une période de repos d'approximativement six heures.

13. Construction selon l'une quelconque des revendications précédentes, caractérisée en ce que les animaux ont un temps d'alimentation d'approximativement une heure.

14. Construction selon l'une quelconque des revendications précédentes, caractérisée en ce que le temps de traite d'un animal est approximativement de six minutes.

15. Construction selon l'une quelconque des revendications précédentes, caractérisée en ce que l'espace (1) donne de la place pour approximativement quatre-vingt animaux.

16. Construction selon l'une quelconque des revendications précédentes, caractérisée en ce que les animaux sont traits trois fois par jour.

17. Construction selon l'une quelconque des revendications précédentes, caractérisée en ce que deux points de rencontre (14, 15) sont situés avant le robot de traite.

18. Construction selon l'une quelconque des revendications précédentes, caractérisée en ce que la zone de robot de traite (2) comporte deux compartiments (31, 32) ayant un robot de traite, un animal étant toujours présent dans l'un des compartiments (31, 32).

19. Construction selon la revendication 18, caractérisée en ce que le robot de traite prévu pour deux compartiments (31, 32) est muni de gobelets trayeurs qui peuvent être reliés automatiquement aux trayons d'un animal présent au niveau d'un côté du robot de traite et, après que cet animal ait été trait, aux trayons d'un animal présent au niveau de l'autre côté de celui-ci.

20. Construction selon l'une quelconque des revendications précédentes, caractérisée en ce qu'un point de rencontre (116) est situé entre la zone d'alimentation (3) et la zone de robot de traite (2).

21. Construction selon l'une quelconque des revendications précédentes, caractérisée en ce que, après avoir été trait et alimenté en fourrage, un groupe d'animaux passe vers la zone de repos (4 à 11) prévue pour eux.

22. Construction selon l'une quelconque des revendications précédentes, caractérisée en ce que l'espace (1) est en liaison avec un pré (35 à 42), et en ce que les animaux peuvent atteindre le pré (35 à 42) via le trajet (12, 43) le long des zones restantes (4 à 11,4' à 11') ou à travers celles-ci.

23. Construction selon la revendication 22, caractérisée en ce que le pré est subdivisé en tronçons (35 à 42), dont le nombre correspond approximativement au nombre de groupes d'animaux.

24. Construction selon l'une quelconque des revendications précédentes, caractérisée en ce que les portes commandées par ordinateur (13, 18, 19, 20, 21, 26, 27) sont agencées dans le trajet, les points de rencontre (14 à 17) et les zones de repos (4 à 11).
